**Europäisches Patentamt**

**European Patent Office**

**Office européen des brevets**

(19)

(11) Publication number: **0 156 871**
**B1**

(12) # EUROPEAN PATENT SPECIFICATION

(45) Date of publication of the patent specification:
26.11.86

(51) Int. Cl.⁴: **B 62 D 35/00**

(21) Application number: **84903570.4**

(22) Date of filling: **21.09.84**

(86) International application number:
**PCT/SE 84/00307**

(87) International publication number:
**WO 85/01260 (28.03.85 Gazette 85/08)**

(54) **STREAMLINING DEVICE FOR A TOWING VEHICLE.**

(30) Priority: **23.09.83 SE 8305165**

(43) Date of publication of application:
**09.10.85 Bulletin 85/41**

(45) Publication of the grant of the patent:
**26.11.86 Bulletin 86/48**

(84) Designated Contracting States:
**DE FR**

(56) References cited:
**WO-A-83/00035**
**GB-A-2 096 549**

(73) Proprietor: **KREKOLA, Pertti Holger, Radhustorget 5 A, S-633 40 Eskilstuna (SE)**

(72) Inventor: **KREKOLA, Pertti Holger, Radhustorget 5 A, S-633 40 Eskilstuna (SE)**

(74) Representative: **Wagner, Anton Robert, ANROWA-Patent HB Box 55, S-644 00 Torshälla (SE)**

EP 0 156 871 B1

LIBER, STOCKHOLM 1986

## Description

The present invention concerns a device for automobiles in order to reduce the air resistance which arises at trailing a caravan and the similar. The device acts in accordance with a "roller blind princip", at which a cloth made of air tight material is arranged between the trailing car and the caravan. The trailer hitch at the trailing car is designed as a frame similar a carrier for skies and the rear end of the cloth is attached in a pulled-out position to the front part at the roof the trailer, where the attachment is made e.g. with hooks fastened to the front part of the roof, which corresponds by holes in the pulled-out cloth.

## Background of the inveniton

Because of the design of trailers, they form a very high air resistance when trailed behind the trailing vehicle. That is why the invention intends to reduce this air resistance by covering the area between the roof of the trailing car and the front part of the trailer. Constructions of to-day, such as the device described in GB-A- 2 096 549 which shows the features of the first part of claim 1 for attaining this purpose, are however not sufficiant because of that these only eliminate the air resistance by their constituting a "spoiler" at the roof of the trailing car.

## Purpose of the invention and main characteristics

The purpose with the invention is to achieve a better fuel economi for trailing cars and if possible to achieve better qualities on the road for these by a reduced air resistance at the trailer. The invention is characterised in that the cloth is arranged on a roller, placed on one of the two of the trailing vehicle or the trailer, from which it can be pulled-out and attached on the other vehicle, and that the roller is attached on the one vehicle by help of a bearing which permits this vehicle to turn relative to the roller. The cloth can be varied in length by the "roller blind princip" e.g. a spring mechanism which winds it up when the pulling-out force is reduced. The force which is needed to pull cloth material out from the roller can be varied from one side of the roller by a hand wheel and a helical spring intermediate to the end of the roller. The under side of the roller is attached in a bar with the same width as the roller. A rod extends from its center to the attachment device which is designed as a "ski carrier". The attachment device at the bar is firm, e.g. not movable, while the attachment at the arched girder is of a movable typ (roller bearing). This design is aimed to reduce the stress in the pulled-out cloth when the trailing car turns e.g. turnable sideways. At the front part of the roller a small spoiler is arranged in order to eliminate the air resistace this roller device causes on the roof of the car. This spoiler is provided with attachement points at the centre axis of the roller on both sides. The attachement at the front part of the roof the trailer (as seen in the direction of movement) can be solved by hookes attached at the front part of the roof, by which these hooks shall be firmly fastened in the front part of the roof with screws. The pulled-out cloth material is characterised by its flexibility, so that this can be pulled-out even at its width, because of that the width of the trailer often exeeds the width of the trailing car.

## Description to drawings

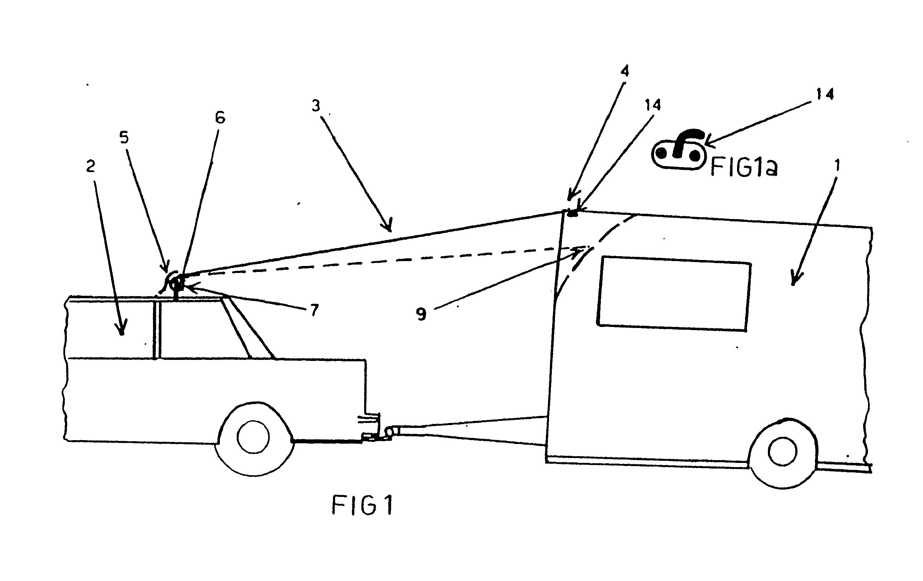

Fig 1 shows the invention mounted upon different trailing vehicles and different trailers.

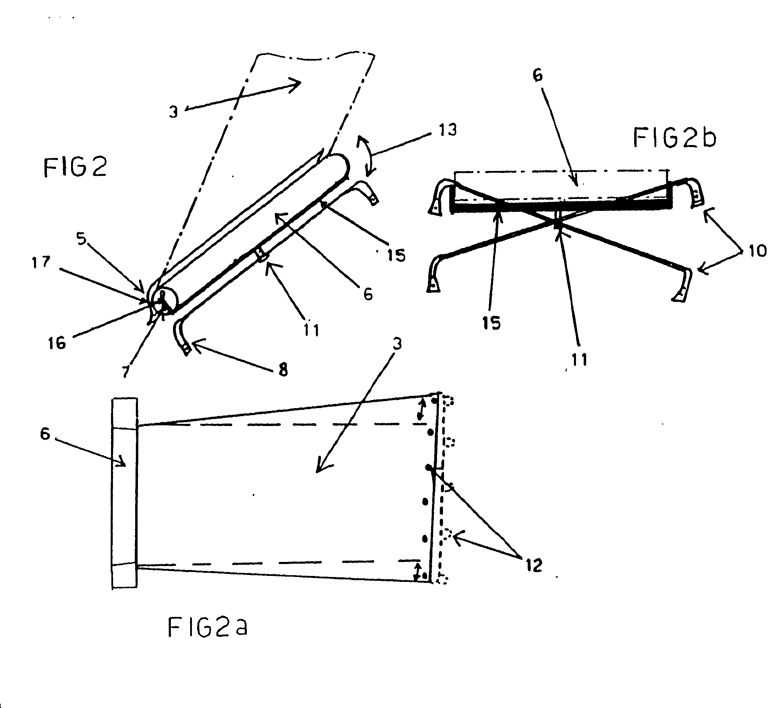

Fig 2 shows the invention complete, not mounted as seen from above.

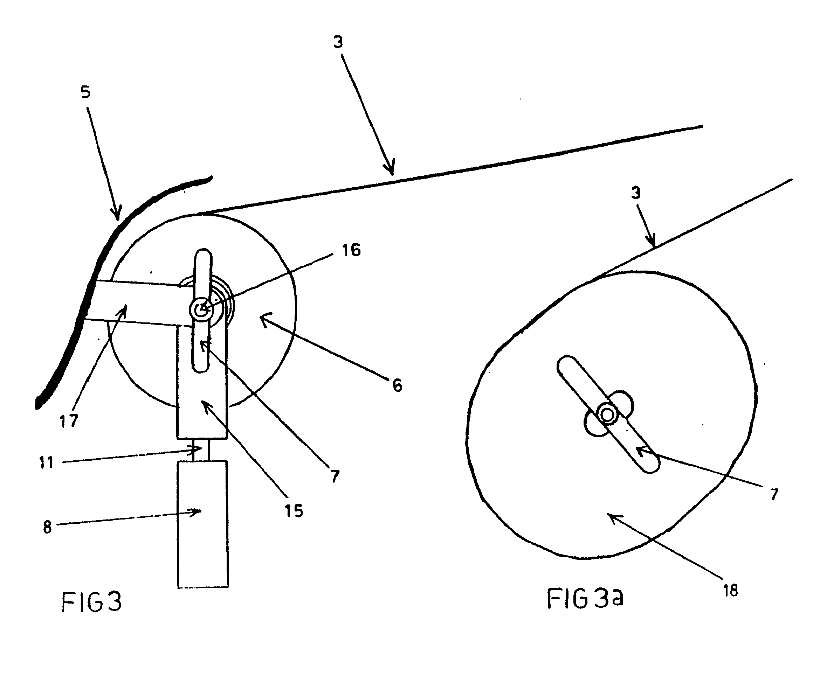

Fig 3 shows the invention from one side.

In the drawing a trailing vehicle is indicated with 2, which trails a trailer. The cloth material 3 which extends from the trailing vehicle is attached at the front part 4 at the trailer 1.

The device includes a roller 6 with a spring actuated movement of "roller blind princip" provided with an air-tight cloth material 3 of flexible type lengthwise and widthwise, attached at the roof of the car by a bracket 8 of a one or multi extension arm "ski carrier type". A bolt them between with a roller bearing attachment attached on the ski carrier is proposed to make it possible a turning sideways according to the arrows indicated with the character 13.

The roller 6 is made in one piece as a roller blind, which lower side is firmly secured to a vertically mounted bolt 11, whose lower part is secured with a roller bearing to a lower bracket 8, to make it possible for the roller 6 to turn sideways 13 when mounted on the roof of the trailing car. At the front part of the roller 6 a spoiler 5 is mounted to turn away wind of speed from in front, by which this is mounted to the centre axis 16 of the roller 6 by brackets 17 at the ends. A hand wheel 7 is mounted on this centre axis, which one projecting part is provided with a screw thread, which together whith a helical spring arranged between at the end of the roller 6 and makes it possible to adjust the force needed when pulling-out the cloth material 3, winded up upon the roller. This cloth material 3 has a quality which makes it tensile lengthwise and widthwise and is provided with attachement devices 12, which have corresponding devices 14 at the trailer 1.

In an alternative embodiment of the invention the roller 18 is made oval to encrease the force of tension in the cloth material 3 pulled-out from the roller 18. The bracket 8, attaching the roller 18 at the roof of the vehicel 2, therefore is provided with doubble crossed legs 10 and the pulled-out cloth material 3 is provided with straps 12 of a tensile material for attaching 14 at the trailer 1. The attachements are mounted at the slooping part 9 of the trailer as its permits.

## Claims

1. Device for reducing the air resistance, which appears at trailing a trailer (1) with a trailing vehicle (2), comprising a cloth (3) of an air-tight material which is arranged between the trailing vehicle (2) and the trailer (1), characterised in that the cloth (3) is arranged on a roller (6, 18), placed on one of the two of the trailing vehicle (2) or the trailer (1), from which it can be pulled-out and attached on the other vehicle, and that the roller (6, 18) is attached on the one vehicle by help of a bearing (11) which permits this vehicle to turn relative to the roller (6, 18).

2. Device in accordance with claim 1, characterised in that the roller (6, 18) is provided with a spring member which will be streched at the pulling-out of the cloth (3) from the roller (6, 18).

3. Device in accordance with claim 2, characterised in that the force of the spring member can be adjusted by help of a hand wheel (7).

## Patentansprüche

1. Anordnung zur Verringerung des Luftwiderstandes, der beim Ziehen eines Anhängers (1) mittels eines Zugfahrzeuges (2) entsteht, bestehend aus einem Tuch (3) aus luftdichtem Material, das zwischen dem Zugfahrzeug (2) und dem Anhänger (1) angebracht ist, dadurch gekennzeichnet, daß das Tuch (3) an einer Rolle (6, 18) auf entweder dem Anhänger (1) oder dem Zugfahrzeug (2) angeordnet ist, von welcher es abgezogen und am anderen Fahrzeug befestigt werden kann, und daß die Rolle (6, 18) mittels eines Traglagers (11) auf einem der Fahrzeuge befestigt ist, was gestattet, daß sich dieses Fahrzeug relativ zur Rolle (6, 18) drehen kann.

2. Anordnung laut Anspruch 1, dadurch gekennzeichnet, daß die Rolle (6, 18) mit einem federnden Organ versehen ist, das beim Abziehen des Tuches (3) von der Rolle (6, 18) gespannt wird.

3. Anordnung laut Anspruch 2, dadurch gekennzeichnet, daß die Zugkraft des federnden Organes mit Hilfe eines Handrades (7) eingestellt werden kann.

## Revendications

1. Dispositif pour réduire la résistance de l'air provoquée par le remorquage d'une remorque (1) par un véhicule tracteur (2), comprenant un tissu (3) en une matière étanche à l'air, disposé entre le véhicule tracteur (2) et la remorque (1), caractérisé en ce que le tissu (3) est monté sur un rouleau (6, 18) placé, soit sur le véhicule tracteur (2), soit sur la remorque (1), dont il peut être tiré et fixé sur l'autre véhicule, et en ce que le rouleau (6, 18) est fixé sur le véhicule au moyen d'un palier (11) qui permet à ce véhicule de tourner par rapport au rouleau (6, 18).

2. Dispositif selon la revendication 1, caractérisé en ce que le rouleau (6, 18) est équipé d'un élément à ressort qui peut être tendu lorsqu'on tire le tissu (3) du rouleau (6, 18).

3. Dispositif selon la revedication 2, caractérisé en ce que la force de l'élément à ressort peut être réglée par un volant (7).

FIG1a

FIG1

0 156 871

FIG2b

FIG2

FIG2a

FIG 3

FIG 3a

0 156 871